# EUROPEAN PATENT APPLICATION

(11) **EP 4 592 164 A1**
(43) Date of publication of application: **30.07.2025**
(21) Application number: 22959529.3
(22) Date of filing: 21.09.2022
(51) Int. Cl.: B62D 6/00, B60W 30/12, B62D 5/04, B62D 101/00, B62D 113/00, B62D 133/00

(54) **DRIVING ASSISTANCE METHOD AND DRIVING ASSISTANCE DEVICE**

(71) Applicant: NISSAN MOTOR CO., LTD., Kanagawa 221-0023 (JP)
(72) Inventor: OURA, Kazuma, Atsugi-shi, Kanagawa 243-0123 (JP); MIYAZAKI, Masahiko, Atsugi-shi, Kanagawa 243-0123 (JP)
(74) Representative: Grünecker Patent- und Rechtsanwälte PartG mbB
(86) International application number: PCT/JP2022/035212
(87) International publication number: WO 2024/062565

(57) **Abstract**

Provided are a driving assistance method and a driving assistance device (14) that: predict whether or not a vehicle (V) traveling with a steering operation of a driver will depart from a lane (L) in which the vehicle (V) is traveling; when predicting that the vehicle (V) will depart from the lane (L), acquire a departure direction in which the vehicle (V) departs from the lane (L) and a turning direction of the vehicle (V); determine whether or not the departure direction and the turning direction are a same direction; and when determining that the departure direction and the turning direction are the same direction, execute steering control such that a steering wheel of the vehicle (V) is not rotated in the departure direction and the vehicle (V) is not departed from the lane (L).

## Description

### Technical Field

The present invention relates to a driving assistance method and a driving assistance device.

### Background Art

Lane departure prevention control is known that prevents a vehicle from departing from a lane in which the vehicle is traveling (Patent Document 1). In the lane departure prevention control, a target yaw rate for departure suppression control that suppresses departure from the lane and a target yaw rate for posture determination control that controls the posture of the vehicle after the departure prevention control are calculated as target yaw rates for the vehicle to travel along a target course. The target yaw rate for the posture determination control is calculated through multiplying a deviation between a target relative-to-lane yaw angle at the time of control termination and a relative-to-lane yaw angle during the posture determination control by a predetermined feedback gain and dividing the result by a target time until the target relative-to-lane yaw angle is reached.

### Prior Art Document

### Patent Document

Patent Document 1: JP6637952B

### Summary of Invention

### Problems to be solved by Invention

In the above conventional technique, when the absolute value of the target relative-to-lane yaw angle at the time of control termination is greater than the absolute value of the relative-to-lane yaw angle during the posture determination control, the steering wheel rotates in the turning direction during the posture determination control. In this case, the steering wheel rotates in the opposite direction to the turning direction due to the departure suppression control and then rotates in the turning direction, and when the posture determination control terminates, the steering wheel rotates again in the opposite direction to the turning direction due to self-aligning torque.

As described above, if the steering wheel is rotated in the turning direction before termination of the posture determination control, the driver will mistakenly recognize the rotation of the steering wheel due to the self-aligning torque after termination of the posture determination control as if a series of steering controls due to the posture determination control continues. As a result, there is a delay in the timing at which the driver starts to operate the steering wheel after termination of the posture determination control, and the vehicle's behavior changes significantly to avoid departure from the lane.

A problem to be solved by the present invention is to provide a driving assistance method and a driving assistance device that are able to prevent the driver from misrecognizing the timing when the steering control terminates and transitions to the steering operation by the driver.

### Means for solving problems

The present invention solves the above problem by, provided that it is predicted that a vehicle traveling with a steering operation of the driver will depart from a lane in which the vehicle is traveling, not allowing the steering wheel of the vehicle to be rotated in the departure direction, in which the vehicle departs from the lane, when determining that the departure direction and the turning direction are the same direction.

### Effect of Invention

According to the present invention, it is possible to prevent the driver from misrecognizing the timing when the steering control terminates and transitions to the steering operation by the driver.

### Brief Description of Drawings

FIG. 1 is a block diagram illustrating an example of a driving assistance system including a driving assistance device of the present invention.
FIG. 2 is a diagram illustrating an example of a travel scene in which steering control is performed as driving assistance using the driving assistance system illustrated in FIG. 1, and a time chart illustrating the movement of the steering wheel during and before and after the steering control.
FIG. 3 is a diagram illustrating a time chart when the vehicle travels at a faster traveling speed in the travel scene illustrated in FIG. 2.
FIG. 4 is a diagram illustrating an example of steering control executed in a travel scene in which the curvature of a curve is larger than that in the travel scene illustrated in FIG. 2, and a time chart illustrating the movement of the steering wheel during and before and after the steering control.
FIG. 5A is a flowchart (part 1) illustrating an example of a processing procedure in the driving assistance system of FIG. 1.
FIG. 5B is a flowchart (part 2) illustrating an example of the processing procedure in the driving assistance system of FIG. 1.
FIG. 5C is a flowchart (part 3) illustrating an example of the processing procedure in the driving assistance system of FIG. 1.
FIG. 6 is a diagram illustrating an example of steering control according to a comparative example of the present invention, and a time chart illustrating the movement of the steering wheel in the steering control according to the comparative example.

### Mode(s) for Carrying out the Invention

Hereinafter, one or more embodiments of the present invention will be described with reference to the drawings.

### <Configuration of Driving Assistance System>

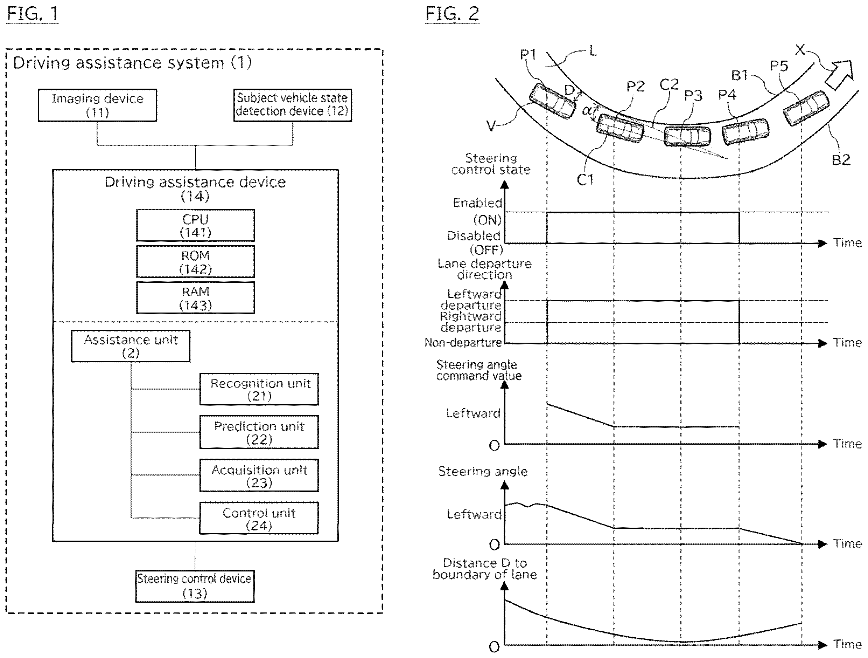

FIG. 1 is a block diagram illustrating a driving assistance system 1 according to the present invention. The driving assistance system 1 is an in-vehicle system that monitors the traveling state of a vehicle traveling with a steering operation of the driver, and when it is predicted that the vehicle will depart from the lane in which the vehicle is traveling, turns steerable wheels of the vehicle to prevent the vehicle from departing from the lane. The steerable wheels refer to wheels that change the traveling direction of the vehicle, and are also called turnable wheels. The steering operation refers, for example, to the driver rotating the steering wheel. The traveling state of the vehicle is a parameter detected by a subject vehicle state detection device described later, and examples thereof include the traveling speed, acceleration, lateral speed, lateral acceleration, yaw rate, and steering wheel rotation angle (also referred to as a "steering angle," hereinafter) of the vehicle.

The vehicle departing from a lane means that the vehicle crosses a boundary that defines the lane and a part or all of the vehicle body is included in a range outside the lane when viewed from above. For example, when the vehicle is traveling in a lane defined by a boundary line such as a white line, if the vehicle crosses the boundary line and enters an adjacent lane, a determination is made that the vehicle departs from the lane. The boundary that defines the lane is not limited to a boundary line such as a white line, and may also be a border between a travelable area and an untravellable area. For example, boundaries that define lanes include a guard rail, a curbstone on the road shoulder, a median strip, and a border between a paved road and an unpaved road (e.g., a gravel road).

As illustrated in FIG. 1, the driving assistance system 1 includes an imaging device 11, a subject vehicle state detection device 12, a steering control device 13, and a driving assistance device 14. The devices constituting the driving assistance system 1 are connected via a controller area network (CAN) or other in-vehicle LAN and can exchange information with each other.

The imaging device 11 is a device that recognizes objects around the vehicle using images. The imaging device 11 may be, for example, one or more cameras such as cameras including CCDs or other imaging elements and ultrasonic cameras. Two or more imaging devices 11 can be provided in one vehicle. For example, such imaging devices 11 may be arranged in the front grille portion of the vehicle, below the right and left door mirrors, and near the rear bumper.

Examples of objects detected by the imaging device 11 include the above-described boundaries that define lanes as well as lane boundary lines of roads, center lines, road surface signs, median strips, guardrails, curbstones, highway side walls, road signs, traffic lights, crosswalks, construction sites, accident sites, and traffic restrictions. Objects also include obstacles that may affect the travel of the vehicle, such as automobiles (other vehicles) other than the subject vehicle, motorcycles (motorbikes), bicycles, and pedestrians.

The detection results of the imaging device 11 are acquired by the driving assistance device 14 at a predetermined time interval as necessary. This predetermined time interval can be set to an appropriate value according to the processing capacity of the driving assistance device 14. In addition, the detection results of a plurality of imaging devices 11 can be integrated or synthesized in the driving assistance device 14 to complement missing information about the detected objects.

The subject vehicle state detection device 12 is a device for detecting the traveling state of the vehicle. Examples of the subject vehicle state detection device 12 include a speed sensor, an acceleration sensor, a yaw rate sensor (e.g., a gyro sensor), a steering angle sensor, and an inertial measurement unit. These devices are not particularly limited, and known devices can be used. The arrangement and number of these devices can be set as appropriate within a range in which the traveling state of the vehicle can be appropriately detected. The detection results of each device are acquired by the driving assistance device 14 at a predetermined time interval as necessary.

The steering control device 13 is an in-vehicle computer for electronically controlling the steering device, and may be, for example, an electronic control unit (ECU). Information required for the steering control by the steering control device 13, such as the traveling speed, acceleration, steering angle, and posture of the vehicle, is acquired from the subject vehicle state detection device 12. Examples of the steering device include a steering actuator (motor) that is attached to the steering column shaft and turns the steerable wheels according to the steering angle. The steering device may also be a steering actuator attached to the steering rack or pinion gear of a mechanism that turns the steerable wheels. Additionally or alternatively, the steering device may adopt a steer-by-wire scheme in which the mechanism for turning the steerable wheels and the steering wheel are mechanically separated. This scheme include both the steering actuator attached to the steering rack or pinion gear of the mechanism for turning the steerable wheels and the steering actuator attached to the column shaft of the steering.

The driving assistance device 14 is a device for controlling the devices constituting the driving assistance system 1 to cooperate with each other, thereby monitoring the traveling state of the vehicle in which the driver performs the steering operation and executing the steering control to suppress the lane departure of the vehicle. The driving assistance device 14 is, for example, a computer and includes a central processing unit (CPU) 141 that is a processor, a read only memory (ROM) 142 that stores programs, and a random access memory (RAM) 143 that serves as an accessible storage device. The CPU 141 is an operating circuit for executing the above-described monitoring and steering control by executing the programs stored in the ROM 142.

The driving assistance device 14 has a monitoring function of monitoring the traveling state and a steering control function of executing the steering control, and these functions are achieved by the CPU 141 executing the programs stored in the ROM 142. In FIG. 1, functional blocks for achieving respective functions are extracted and illustrated for descriptive purposes. The functions possessed by the functional blocks illustrated in FIG. 1, that is, an assistance unit 2, a recognition unit 21, a prediction unit 22, an acquisition unit 23, and a control unit 24, will be described below.

### <Functions of Functional Blocks>

The assistance unit 2 has a function of acquiring information from the devices constituting the driving assistance system 1, processing the acquired information, outputting instructions to the devices, and allowing the devices constituting the driving assistance system 1 to cooperate with each other. FIG. 2 is a plan view illustrating an example of a travel scene in which the driving assistance device 14 executes the monitoring using the monitoring function and the steering control using the steering control function.

The travel scene illustrated in FIG. 2 is a travel scene in which a vehicle V is traveling in the direction of an arrow X in a lane L. That is, the vehicle V illustrated in FIG. 2 travels from the left side to the right side of the drawing in the lane L defined by a boundary line B1 on the left side of the traveling direction of the vehicle V and a boundary line B2 on the right side of the traveling direction.

In the travel scene of FIG. 2, it is assumed that the driver performs the steering operation of the vehicle V, which enters a left curve curving to the left as illustrated in FIG. 2 and is currently traveling at a position P1. It is also assumed that if the steering angle after entering the left curve is large and the turning of the steerable wheels is not performed by the driving assistance device 14, the vehicle V will turn to the left of the traveling direction from the position P1, cross the boundary line B1, and depart from the lane L. In this case, the driving assistance device 14 predicts the departure of the vehicle V from the lane L using the monitoring function, and executes the steering control using the steering control function as necessary.

The recognition unit 21 has a function of recognizing the travel environment around the vehicle V in order to predict the departure of the vehicle V from the lane L. The driving assistance device 14 recognizes the travel environment around the vehicle V using the function of the recognition unit 21 with the imaging device 11. The travel environment is information for determining whether the vehicle V can maintain the current traveling state or needs to change the traveling state, and includes, for example, information such as the type and position of an object, the type and position of an obstacle if present, and road conditions. The driving assistance device 14 performs appropriate processing such as pattern matching on the detection results of the imaging device 11 to recognize the travel environment.

In the travel scene illustrated in FIG. 2, the driving assistance device 14 performs edge extraction processing on the detection results of the imaging device 11 using the function of the recognition unit 21 to recognize the boundary lines B1 and B2.

The driving assistance device 14 may also acquire the distance in the width direction between the vehicle V and the boundary line B1 or B2 according to the rotation direction of the steering wheel or the turning direction of the vehicle V. In the travel scene illustrated in FIG. 2, the driver inputs a left rotation torque to the steering wheel, and the vehicle V turns left, so when the torque is detected, the driving assistance device 14 acquires a distance D in the width direction between the vehicle V and the boundary line B1 on the left side of the traveling direction. The step of acquiring the distance D in the width direction is not an essential feature of the present invention, and may be provided as necessary.

The prediction unit 22 has a function of predicting whether or not the vehicle V traveling with the steering operation of the driver will depart from the lane L in which the vehicle V is traveling. The driving assistance device 14 acquires the traveling direction of the vehicle V using the function of the prediction unit 22, and predicts whether or not the vehicle V will depart from the lane L by crossing the boundary that defines the lane L when the vehicle V continues to travel along the traveling direction. The traveling direction of the vehicle V is recognized from the yaw rate acquired from the yaw rate sensor, the steering angle acquired from the steering angle sensor, etc.

As an example of a method of predicting the departure of the vehicle V, the driving assistance device 14 detects a boundary of the lane L in which the vehicle V is traveling from the image data acquired from the imaging device 11, and recognizes the positional relationship between the boundary and the vehicle V. In other words, from the above-described distance D in the width direction or the like, the driving assistance device 14 recognizes whether the vehicle V is far from the boundary, whether the vehicle V is close to the boundary, how far the vehicle V is from the boundary, etc. In addition, the driving assistance device 14 calculates a relative-to-lane yaw angle that is the angle between the traveling direction of the vehicle V and the tangent direction of the lane at a position on the lane L at which the vehicle V is traveling. Then, the driving assistance device 14 predicts whether or not the vehicle V will cross a boundary that defines the lane L when the vehicle V travels while maintaining the relative-to-lane yaw angle calculated. The tangent direction of the lane L is calculated from the positional relationship between the above-described boundary and the vehicle V.

The driving assistance device 14 calculates the relative-to-lane yaw angle between a line C1 parallel to the traveling direction of the vehicle V and a tangent C2 to the boundary line B1 at the traveling position of the vehicle V, as illustrated in FIG. 2, for example, and acquires the distance D in the width direction between the vehicle V and the boundary line B1. An example of the relative-to-lane yaw angle is illustrated as α in FIG. 2. Then, the driving assistance device 14 predicts the departure of the vehicle V from the relative-to-lane yaw angle and the distance D. When the relative-to-lane yaw angle is within a range in which the vehicle V can travel along the lane L, and the distance D is long (i.e., the vehicle V is away from the boundary line B1), the driving assistance device 14 predicts that the vehicle V will not depart from the lane L. On the other hand, when the relative-to-lane yaw angle of the vehicle V is larger or smaller than the range in which the vehicle V can travel along the lane L (i.e., when the steering angle is too large or too small for the required relative-to-lane yaw angle), when the distance D is short (i.e., when the vehicle V and the boundary line B1 are close to each other), etc., the driving assistance device 14 predicts that the vehicle V will depart from the lane L. It is assumed that the tangent C2 to the boundary line B1 is, for example, the tangent at a point on the boundary line B1 that is closest to the body of the vehicle V.

The driving assistance device 14 may also determine whether or not the vehicle V will enter a curve, and predict the departure of the vehicle V when determining that the vehicle V will enter a curve. For example, provided that the vehicle V is traveling straight ahead, when the boundary line of the lane L present ahead of the vehicle V is curved, the driving assistance device 14 determines that the vehicle V will enter a curve, and when the boundary line is not curved, the driving assistance device 14 determines that the vehicle V will not enter a curve. Alternatively or in addition to this, the driving assistance device 14 may acquire the current position of the vehicle V from a GPS unit (not illustrated), obtain road information around the vehicle V from map information (not illustrated), and determine whether or not the vehicle V will enter a curve from the road information ahead of the vehicle V. The determination of entering a curve is not an essential feature of the present invention, and may be provided as necessary.

In the travel scene illustrated in FIG. 2, the driver rotates the steering wheel too far to the left, so the relative-to-lane yaw angle of the vehicle V is larger than the range in which the vehicle V can travel along the lane L. Accordingly, if the vehicle V travels while maintaining the relative-to-lane yaw angle, it will cross the boundary line B1 that defines the lane L and head outside the lane L, so the driving assistance device 14 predicts that the vehicle V will depart from the lane L. Then, when the driving assistance device 14 predicts that the vehicle V will depart from the lane L, the steering control function of the driving assistance device 14 is activated and the steering control is executed.

The acquisition unit 23 has a function of acquiring the departure direction in which the vehicle V departs from the lane L. The departure direction of the vehicle V refers to a direction in which the vehicle V will head if it departs from the lane L in which it is traveling, and indicates whether the vehicle V will depart to the right or left of the traveling direction. In other words, the departure direction indicates whether the vehicle V will cross the boundary on the right side of the traveling direction or the boundary on the left side of the traveling direction among the boundaries that define the lane L when it is predicted that the vehicle V will depart from the lane L in which it is traveling. When the departure direction is to the left, the vehicle V will depart from the lane L by crossing the boundary on the left side of the traveling direction, while when the departure direction is to the right, the vehicle V will depart from the lane L by crossing the boundary on the right side of the traveling direction.

The driving assistance device 14 acquires the departure direction in which the vehicle V departs from the lane L from the information on the traveling direction of the vehicle V used when predicting the departure of the vehicle V from the lane L. For example, upon prediction that the vehicle V will depart from the lane L, when the traveling direction of the vehicle V is to the left front or to the left side of the vehicle V, the departure direction is to the left, while when the traveling direction of the vehicle V is to the right front or to the right side of the vehicle V, the departure direction is to the right.

The control unit 24 has a function of executing the steering control that does not cause the vehicle V to depart from the lane L. The steering control that does not cause the vehicle V to depart from the lane L refers to increasing or decreasing the turning angle by turning the steerable wheels using a turning mechanism in order to make the traveling direction of the vehicle V along the lane L. The driving assistance device 14 operates the steering actuator via the steering control device 13 so that the relative-to-lane yaw angle of the vehicle V is within a range in which the vehicle V can travel along the lane L, thus turning the steerable wheels left or right (i.e., pointing the steerable wheels toward the target direction) to adjust the steerable wheels. The above-described range is set appropriately based on the traveling speed of the vehicle V and the curvature of the lane L.

The driving assistance device 14 may control the traveling speed of the vehicle V using a speed control device (not illustrated) during the execution of steering control. When the traveling speed control is not executed, the traveling speed of the vehicle V is controlled by the driver's operation. The steering actuator may also be operated via the steering control device 13 to turn the steerable wheels left or right to adjust the steering angle. In the case of a steer-by-wire scheme in which the mechanism for turning the steerable wheels is mechanically separated from the steering wheel, one or both of the turning angle of the steering actuator attached to the steering rack or pinion gear of the mechanism for turning the steerable wheels and the steering angle of the steering actuator attached to the steering column shaft can be adjusted.

In the travel scene illustrated in FIG. 2, it is assumed that the vehicle V is predicted to depart from the lane L to the left when the vehicle V is traveling at the position P1. In this case, the driving assistance device 14 acquires the departure direction using the function of the acquisition unit 23, and executes the steering control to avoid the departure from the lane L using the function of the control unit 24. Specifically, since the departure direction is to the left, the driving assistance device 14 outputs an instruction to turn the steerable wheels to the right to the steering control device 13.

The steering control executed in the travel scene illustrated in FIG. 2 will be described in detail using a timing diagram. FIG. 2 illustrates five timing diagrams, from top to bottom: (1) a diagram of the steering control state; (2) a diagram of the departure direction of the vehicle V; (3) a diagram of the steering angle command value in the steering control; (4) a diagram of the steering angle; and (5) a diagram of the distance D in the width direction between the vehicle V and the boundary line B1. The horizontal axis of each diagram represents time, and the time corresponds to the elapsed time in the travel scene illustrated in the upper part of FIG. 2.

The diagram of the steering control state illustrates whether the steering control is in an enabled (ON) state or disabled (OFF) state. When the steering control is in the enabled state, the value takes being "enabled (ON)," while when the steering control is in the disabled state, the value takes being "disabled (OFF)." In the diagram of the departure direction of vehicle V, the value takes being "leftward departure" or "rightward departure" depending on the departure direction of the vehicle V, while when it is predicted that vehicle V will not depart from lane L, the value takes being "non-departure."

The diagram of the steering angle command value is a diagram illustrating the steering angle command value which is output from the driving assistance device 14 to the steering control device 13 in the steering control. In the diagram of the steering angle command value and the diagram of the steering angle, the leftward rotation is represented by a positive value, and the rightward rotation is represented by a negative value. In the travel scene illustrated in FIG. 2, it is assumed that the steering wheel and the steerable wheels are connected, and the turning angle changes according to the change in the steering angle. The processing in the steering control will be described below using the timing diagrams.

In the travel scene illustrated in FIG. 2, when the vehicle V is traveling at the position P1, it is predicted that the vehicle V will depart from the lane L to the left, so as illustrated in the diagram of the steering control state, the steering control is enabled (ON) at the position P1. Next, since the vehicle V is heading forward to the left in the travel scene illustrated in FIG. 2, the departure direction is determined to be left, as illustrated in the diagram of the departure direction of the vehicle V. The driving assistance device 14 acquires information indicating that the departure direction is to the left.

Since the departure direction of the vehicle V is to the left, the driving assistance device 14 outputs an instruction to the steering control device 13 to rotate the steering wheel to the right so that the vehicle V can travel along the lane L. Specifically, as illustrated in the diagram of the steering angle command value, the driving assistance device 14 outputs an instruction having a command value to decrease the steering angle to the left. This allows the steering wheel to be rotated to the right, and the steering angle to the left becomes smaller as illustrated in the diagram of the steering angle. In the case of the steer-by-wire scheme, the steering angle command value becomes the turning angle command value, and the steerable wheels are turned by the turning mechanism in accordance with that command value. Along with this, a target steering angle is set, and the steering wheel is rotated by the steering actuator attached to the column shaft.

In the travel scene of FIG. 2, it is assumed that when the steering wheel is rotated to the right at a constant angular velocity by the steering control device 13 and the vehicle V is traveling at a position P2, the relative-to-lane yaw angle of the vehicle V becomes an angle within a range in which the vehicle V can travel along the lane L. In this case, at the time point when the traveling position of the vehicle V reaches the position P2, the driving assistance device 14 outputs an instruction to the steering control device 13 to stop the rotation of the steering wheel and maintain the steering angle. This stops the rotation of the steering wheel to the right, and the steering angle is maintained as illustrated in the diagram of the steering angle. The vehicle V maintains the steering angle illustrated in FIG. 2, the relative-to-lane yaw angle of the vehicle V changes from a decrease to an increase, and the vehicle V travels to a position P3 at which the relative-to-lane yaw angle starts to increase. Note that the position P3 is also a position at which the vehicle V is closest to the boundary line B1 that defines the lane L.

As illustrated in the diagram of the distance D in the width direction, while the vehicle V is traveling from the position P1 to the position P3, the distance between the vehicle V and the boundary line B1 gradually becomes shorter, so the driving assistance device 14 continues to repeatedly perform the departure determination for the vehicle V. While the departure determination is being performed, as illustrated in the diagram of the departure direction of the vehicle V, the departure direction takes a value of departure to the left. It is not necessary to stop the rotation of the steering wheel at the position P2.

After the vehicle V passes the position P3 at which the relative-to-lane yaw angle of the vehicle V starts to increase, the distance D between the vehicle V and the boundary line B1 gradually becomes longer. At the stage in which after the vehicle V passes the position P3, the traveling state away from the boundary line B1 continues and a determination is made that the vehicle V leaves the traveling state of departing from the lane L, the driving assistance device 14 predicts that the vehicle V will not depart from the lane L. For example, the driving assistance device 14 predicts that the vehicle V will not depart from the lane L at the timing when the vehicle V is traveling at a position P4 after a predetermined time elapses since the vehicle V has passed the position P3. In this case, the driving assistance device 14 terminates the steering control at the position P4 and transitions to traveling by the steering operation of the driver.

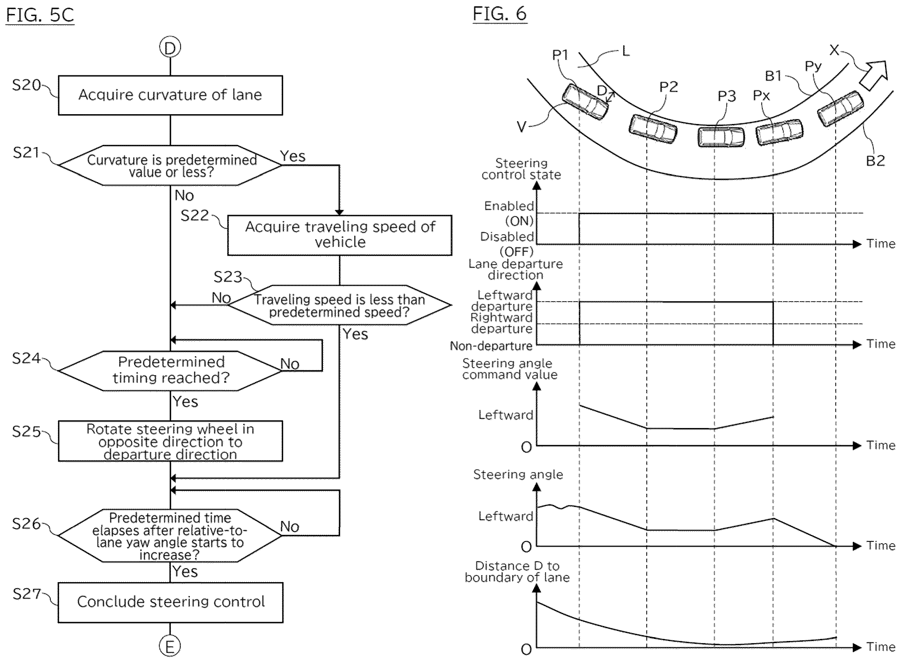

If the relative-to-lane yaw angle of the vehicle V is controlled to maintain an angle within a range in which the vehicle V can travel along the lane L, as before passing the position P3, the steering wheel may be rotated to the left after passing the position P3. FIG. 6 is a diagram illustrating the steering control according to a comparative example of the present invention, and the travel scene illustrated in FIG. 6 is a travel scene in which the relative-to-lane yaw angle of the vehicle V is controlled to maintain an angle within the above-described range even after the vehicle V passes the position P3 in the travel scene illustrated in FIG. 2.

As illustrated in the diagram of the steering angle command value in FIG. 6, in the steering control according to the comparative example, after passing the position P3, an instruction to rotate the steering wheel left is output to the steering control device 13, and the leftward steering angle increases according to the command value. It is assumed that, then at a position Px at which a predetermined time has elapsed after passing the position P3, the distance D between the vehicle V and the boundary line B1 increases, and it is predicted that the vehicle V will not depart from the lane L. In this case, the steering control terminates at the position Px, and as illustrated in the diagram of the steering control state, the steering control state becomes disabled (OFF). In addition, the departure direction takes a non-departure value. If the driver does not start the steering operation after the steering control terminates at the position Px, the steering wheel rotates rightward due to the self-aligning torque as illustrated in FIG. 6. If the traveling continues in this state, the steering angle becomes 0° at the timing when the vehicle V is traveling at a position Py, and the rotation of the steering wheel stops.

In the steering control illustrated in FIG. 6, the steering wheel rotates left while traveling from the position P3 to position the Px, and rotates right while traveling from the position Px to the position Py. Thus, if the left rotation by the steering control is performed before the right rotation by the self-aligning torque, the driver will mistakenly recognize that the right rotation by the self-aligning torque is a series of steering controls that follows the left rotation by the steering control. In addition, the driver expects that the steering control will continue even after a predetermined time elapses since passing the position P3, and that the steering wheel will automatically rotate again even after passing the position Py and the rotation of the steering wheel stops. The driver will therefore not start the steering operation even when the vehicle V passes the position Py, and will start the steering operation after the vehicle V approaches the boundary line B2. In this case, the vehicle V is turned left in a relatively short time, and the behavior of the vehicle V will change significantly.

In this context, the driving assistance device 14 of the present embodiment acquires the turning direction of the vehicle V using the function of the acquisition unit 23, and determines whether or not the departure direction and turning direction of the vehicle V are the same direction using the function of the control unit 24. When determining that the departure direction and the turning direction are the same direction, the driving assistance device 14 executes the steering control so that the steering wheel is not rotated in the departure direction. In other words, when the vehicle V departs in the turning direction, the driving assistance device 14 rotates the steering wheel only in the opposite direction to the departure direction from the start to the end of the steering control, rather than rotating the steering wheel in the departure direction.

In contrast, when determining that the departure direction and the turning direction are not the same direction, the driving assistance device 14 executes normal steering control to suppress the departure from the lane L. When the vehicle V departs in the opposite direction to the turning direction, the steering angle is in an insufficient state to turn along the lane L, so the driving assistance device 14 increases the steering angle so that the vehicle V heads in the opposite direction to the predicted departure direction. At the time point when the relative-to-lane yaw angle starts to increase, the turning angle of the vehicle V is a larger angle than the range in which the vehicle V can travel along the lane L. Accordingly, the steering angle is decreased to make the vehicle V travel along the lane L. In other words, in a travel scene in which the departure direction and the turning direction are different, the steering angle is only decreased after it has increased once, and the steering control is not performed to decrease the steering angle and then increase it again, so that the driver does not mistakenly recognize the rotation of the steering wheel due to the self-aligning torque as the rotation due to the steering control.

The driving assistance device 14 acquires whether the turning direction of the vehicle V is leftward or rightward from the detection result of the steering angle sensor. The driving assistance device 14 may acquire the departure direction and the turning direction simultaneously, or may acquire either the departure direction or the turning direction first. The driving assistance device 14 may also recognize the turning direction of the vehicle V from the yaw rate acquired from the yaw rate sensor, the relative-to-lane yaw angle obtained from the detection result of the imaging device 11, the lateral acceleration acquired from the acceleration sensor, etc.

In the travel scene illustrated in FIG. 2, as illustrated in the diagram of the steering angle command value, the same steering angle command value is output as the command value even after the vehicle V passes the position P3. The steering wheel therefore does not rotate and the steering angle is maintained. Then, at the position P4 at which a predetermined time has elapsed after passing the position P3, the steering control terminates and the steering control state becomes disabled (OFF). If the driver does not start the steering operation after the steering control terminates at the position P4, the steering wheel rotates rightward due to the self-aligning torque as illustrated in FIG. 2. If the traveling continues in this state, the steering angle becomes 0° at the timing when the vehicle V is traveling at a position P5, and the rotation of the steering wheel stops.

In the steering control illustrated in FIG. 2, the steering wheel does not rotate to the left, which is the same as the departure direction, while traveling from the position P3 to the position P4. The driver therefore recognizes that the steering control has terminated at the timing when the right rotation due to the self-aligning torque starts, and can start the steering operation. In addition, even if the driver does not notice that the steering control has terminated and the vehicle V travels to the position P5, unlike the steering control according to the comparative example, the driver does not expect the steering wheel to rotate automatically again. Accordingly, the steering operation can be started promptly when the vehicle V passes the position P5.

The driving assistance device 14 may also stop the rotation of the steering wheel at a certain timing between when the relative-to-lane yaw angle starts to increase and when the increment of the relative-to-lane yaw angle reaches a predetermined angle, and maintain the steering angle. In this case, the steering control terminates in a state in which the steering wheel stops. The predetermined angle is, for example, 0.05° to 0.2°. Alternatively, the driving assistance device 14 may stop the rotation of the steering wheel at a certain timing between when the relative-to-lane yaw angle starts to increase and when a certain fixed time elapses, and maintain the steering angle. In this case, the steering control terminates in a state in which the steering wheel stops. The certain time is, for example, 0.1 to 1 second.

In the travel scene illustrated in FIG. 2, the steering angle is maintained from the position P2, at which the relative-to-lane yaw angle of the vehicle V is within the range in which the vehicle V can travel along the lane L, to the position P3, at which the relative-to-lane yaw angle of the vehicle V starts to increase, but it is not necessary to maintain the steering angle between the positions P2 and P3, and the steering angle may vary between the positions P2 and P3. These exemplified steering controls are not essential features of the present invention, and may be provided as necessary.

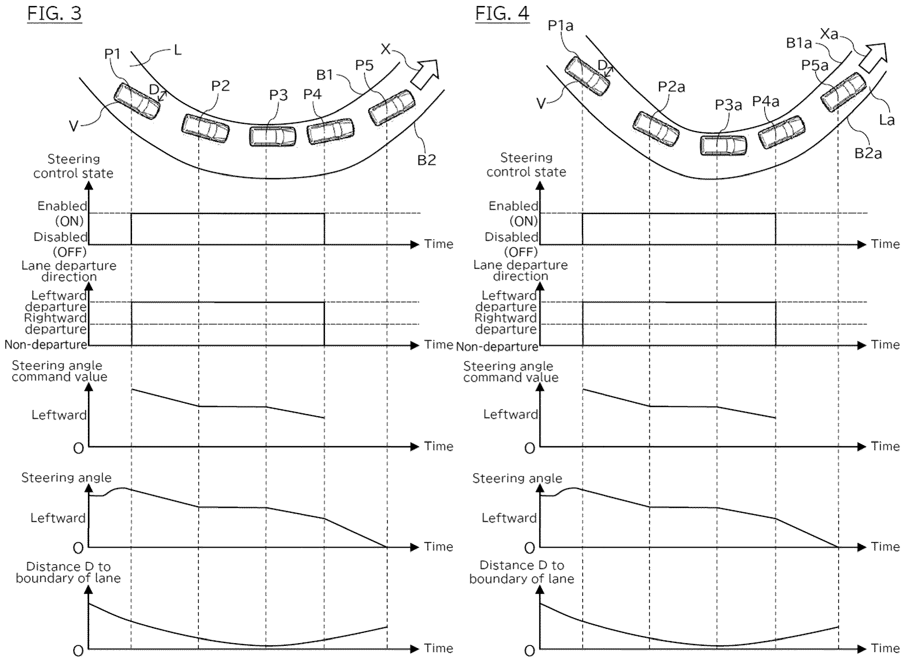

The steering control when the vehicle V travels at a faster traveling speed in the travel scene illustrated in FIG. 2 will then be described with reference to FIG. 3. The travel scene illustrated in FIG. 3 is similar to the travel scene illustrated in FIG. 2, but the only difference is that the traveling speed of the vehicle V is faster than that in the travel scene illustrated in FIG. 2. When following a certain travel trajectory, the steering angle needs to be increased as the traveling speed increases. The steering angle is therefore larger in the travel scene illustrated in FIG. 3 than in the travel scene illustrated in FIG. 2. If the steering control is terminated in this state in which the steering angle is large, the self-aligning torque will cause the rotation speed of the steering wheel to increase, and the behavior of the vehicle V will change significantly.

In this context, the driving assistance device 14 acquires the traveling speed of the vehicle V, and when the traveling speed of the vehicle V is equal to or lower than a predetermined speed, the driving assistance device 14 rotates the steering wheel in the opposite direction to the departure direction and calculates the relative-to-lane yaw angle of the vehicle V. Then, at a certain timing between when the relative-to-lane yaw angle starts to increase and when the increment of the relative-to-lane yaw angle reaches a predetermined angle, the driving assistance device 14 terminates the rotation of the steering wheel and maintains the steering control in a state of maintaining the steering angle.

On the other hand, when the traveling speed of the vehicle V is faster than the predetermined speed, the driving assistance device 14 rotates the steering wheel in the opposite direction to the departure direction and calculates the relative-to-lane yaw angle of the vehicle V. Then, at a certain timing between when the relative-to-lane yaw angle starts to increase and when the increment of the relative-to-lane yaw angle reaches a predetermined angle, the driving assistance device 14 terminates the rotation of the steering wheel and maintains the steering angle. Furthermore, from a predetermined timing after the steering angle maintenance starts, the driving assistance device 14 rotates the steering wheel in the opposite direction to the departure direction and terminates the steering control in a state in which the steering wheel is rotating in the opposite direction to the departure direction. This allows the steering angle to decrease before the steering control terminates, and the behavior of the vehicle V can therefore be prevented from changing significantly due to the self-aligning torque.

The predetermined speed can be set to an appropriate value within a range in which the change in behavior due to the self-aligning torque does not give an uncomfortable feeling to the occupants of the vehicle V. The predetermined timing is a timing between when the steering angle maintenance starts and when the steering control terminates, for example, the timing when the vehicle V passes the position at which the relative-to-lane yaw angle of the vehicle V starts to increase. In addition, when the traveling speed is faster than a predetermined speed, the driving assistance device 14 may set the speed at which the steering wheel is rotated in the opposite direction to the departure direction to be higher as the traveling speed is faster.

In the travel scene illustrated in FIG. 3, the driving assistance device 14 executes the steering control similar to that illustrated in FIG. 2 up to the position P3. After the vehicle V passes the position P3, a command value for decreasing the steering angle to the left is output as illustrated in the diagram of the steering angle command value. Accordingly, the steering wheel rotates to the right and continues to rotate at a constant angular velocity until the position P4 at which a predetermined time has elapsed after passing the position P3. If the driver does not start the steering operation after the steering control terminates at the position P4 and the steering control state becomes disabled (OFF), the steering wheel rotates to the right due to the self-aligning torque as illustrated in FIG. 3. If the travel continues in this state, the steering angle becomes 0° at the timing when the vehicle V is traveling at the position P5, and the rotation of the steering wheel stops.

The steering control when the vehicle V travels on a curve with a larger curvature than the curve illustrated in FIG. 2 will then be described with reference to FIG. 4. The travel scene illustrated in FIG. 4 is similar to the travel scene illustrated in FIG. 2, but the only difference is that the curvature of the curve is larger than that of the curve illustrated in FIG. 2. In the travel scene illustrated in FIG. 4, the vehicle V is traveling in the direction of an arrow Xa in a lane La, and the lane La is defined by a boundary line B1a on the left side of the traveling direction of the vehicle V and a boundary line B2a on the right side of the traveling direction.

In the travel scene illustrated in FIG. 4, the curvature of the curve is larger than that illustrated in FIG. 2, so if the vehicle V travels at the same traveling speed as in the travel scene illustrated in FIG. 2, the steering angle needs to be larger than the angle illustrated in FIG. 2. In the travel scene illustrated in FIG. 4, therefore, the steering angle is larger than that illustrated in FIG. 2. In this case, as in the travel scene illustrated in FIG. 3, if the steering control is terminated in a state in which the steering angle is large, the behavior of the vehicle V will change significantly due to the self-aligning torque.

In this context, the driving assistance device 14 acquires the curvature of the lane La, and when the curvature of the lane La is equal to or less than a predetermined value, the driving assistance device 14 rotates the steering wheel in the opposite direction to the departure direction and calculates the relative-to-lane yaw angle of the vehicle V. Then, at a certain timing between when the relative-to-lane yaw angle starts to increase and when the increment of the relative-to-lane yaw angle reaches a predetermined angle, the driving assistance device 14 terminates the rotation of the steering wheel and maintains the steering control in a state of maintaining the steering angle.

On the other hand, when the curvature of the lane La is greater than the predetermined value, the driving assistance device 14 rotates the steering wheel in the opposite direction to the departure direction and calculates the relative-to-lane yaw angle of the vehicle V. Then, at a certain timing between when the relative-to-lane yaw angle starts to increase and when the increment of the relative-to-lane yaw angle reaches a predetermined angle, the driving assistance device 14 terminates the rotation of the steering wheel and maintains the steering angle. Furthermore, from a predetermined timing after the steering angle maintenance starts, the driving assistance device 14 rotates the steering wheel in the opposite direction to the departure direction and terminates the steering control in a state in which the steering wheel is rotating in the opposite direction to the departure direction. This allows the steering angle to decrease before the steering control terminates, and the behavior of the vehicle V can therefore be prevented from changing significantly due to the self-aligning torque.

The predetermined value can be set to an appropriate value within a range in which the change in behavior due to the self-aligning torque does not give an uncomfortable feeling to the occupants of the vehicle V. As described above, the predetermined timing is a timing from the timing when the steering angle maintenance starts to the timing when the steering control terminates, for example, the timing when the vehicle V passes the position at which the relative-to-lane yaw angle of the vehicle V starts to increase. In addition, when the curvature of the lane La is greater than a predetermined value, the driving assistance device 14 may set the speed at which the steering wheel is rotated in the opposite direction to the departure direction to be higher as the curvature is greater.

In the travel scene illustrated in FIG. 4, the driving assistance device 14 executes the steering control similar to that illustrated in FIG. 2 up to the position P3a. After the vehicle V passes the position P3a, a command value for decreasing the steering angle to the left is output as illustrated in the diagram of the steering angle command value. Accordingly, the steering wheel rotates to the right and continues to rotate at a constant angular velocity until a position P4a at which a predetermined time has elapsed after passing the position P3a. If the driver does not start the steering operation after the steering control terminates at the position P4a and the steering control state becomes disabled (OFF), the steering wheel rotates to the right due to the self-aligning torque as illustrated in FIG. 4. If the travel continues in this state, the steering angle becomes 0° at the timing when the vehicle V is traveling at the position P5a, and the rotation of the steering wheel stops.

The following features are not essential features of the present invention, and may be added as necessary: acquiring the curvature of the lane La; acquiring the traveling speed of the vehicle V; rotating the steering wheel in the opposite direction to the departure direction from a predetermined timing after starting the steering angle maintenance; terminating the steering control in the state in which the steering wheel is rotating in the opposite direction to the departure direction; and rotating the steering wheel in the opposite direction to the departure direction and, at a certain timing between when the relative-to-lane yaw angle starts to increase and when the increment of the relative-to-lane yaw angle reaches a predetermined angle, terminating the rotation of the steering wheel and maintaining the steering angle.

### <Processing in Driving Assistance System>

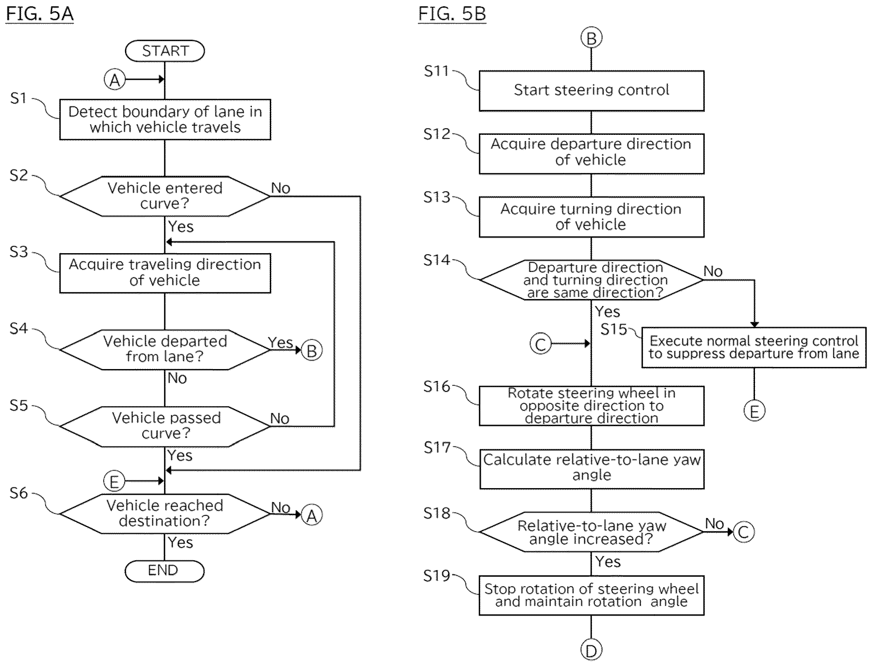

With reference to FIGS. 5A to 5C, the procedure when the driving assistance device 14 processes information will be described. FIGS. 5A to 5C depict an example of a flowchart illustrating the processing of information executed in the driving assistance system 1 of the present embodiment. The processing described below is executed at a predetermined time interval by the CPU 141, which is the processor of the driving assistance device 14.

First, in step S1 of FIG. 5A, the recognition unit 21 uses its function to detect a boundary of the lane L in which the vehicle V travels from the detection result of the imaging device 11, and in the subsequent step S2, the prediction unit 22 uses its function to determine whether or not the vehicle V will enter a curve. When a determination is made that the vehicle V will not enter a curve, the process proceeds to step S6, in which the assistance unit 2 uses its function to determine whether or not the vehicle V has reached the destination. When a determination is made that the vehicle V has reached the destination, the execution of the routine is terminated, while when a determination is made that the vehicle V has not reached the destination, the process proceeds to step S1.

When a determination is made in step S2 that the vehicle V will enter a curve, the process proceeds to step S3, in which the prediction unit 22 uses its function to acquire the travelling direction of the vehicle V, and in the subsequent step S4, it is predicted whether or not the vehicle V will depart from the lane L. When it is predicted that the vehicle V will not depart from the lane L, the process proceeds to step S5, in which a determination is made whether or not the vehicle V has passed through a curve. When the vehicle V is traveling straight ahead and the boundary of the lane L is not curved, a determination is made that the vehicle V has passed through a curve, and the process proceeds to step S6, while when a determination is made that the vehicle V has not passed through a curve, the process proceeds to step S3.

When a determination is made in step S4 that the vehicle V will depart from the lane L, the process proceeds to step S11 of FIG. 5B. In step S11, the control unit 24 uses its function to start the steering control, and in the subsequent step S12, the acquisition unit 23 uses its function to acquire the departure direction of the vehicle, followed by step S13 in which the turning direction of the vehicle V is acquired. In the subsequent step S14, a determination is made whether or not the departure direction and the turning direction are the same direction, and when they are different directions, the process proceeds to step S15. In step S15, normal steering control is executed to suppress the departure from the lane L, and the process proceeds to step S6 in FIG. 5A.

On the other hand, when the departure direction and the turning direction are the same direction, the process proceeds to step S16, in which the steering actuator is operated via the steering control device 13 to rotate the steering wheel in the opposite direction to the departure direction. In the subsequent step S17, the relative-to-lane yaw angle is calculated, and in step S18, a determination is made whether or not the relative-to-lane yaw angle has increased. When a determination is made that the relative-to-lane yaw angle has not increased, the process proceeds to step S16, in which the steering wheel is rotated in the opposite direction to the departure direction using the steering control device 13. On the other hand, when a determination is made that the relative-to-lane yaw angle is increasing (or has started to increase), the process proceeds to step S19, in which the rotation of the steering wheel is stopped until the increment of the relative-to-lane yaw angle reaches a predetermined angle, and the steering angle is maintained.

The process proceeds to step S20 in FIG. 5C, in which the acquisition unit 23 uses its function to acquire the curvature of the lane L, and in the subsequent step S21, the control unit 24 uses its function to determine whether or not the curvature is equal to or less than a predetermined value. When the curvature is equal to or less than the predetermined value, the process proceeds to step S22, and when the curvature is more than the predetermined value, the process proceeds to step S24. In step S22, the traveling speed of the vehicle V is acquired, and in step S23, a determination is made whether or not the traveling speed of the vehicle V is equal to or less than a predetermined speed. When the traveling speed is equal to or less than the predetermined speed, the process proceeds to step S26, and when the traveling speed is faster than the predetermined speed, the process proceeds to step S24.

In step S24, the control unit 24 uses its function to determine whether or not the predetermined timing has been reached, and when a determination is made that the predetermined timing has not been reached, step S24 is repeated until the predetermined timing is reached. On the other hand, when a determination is made that the predetermined timing has been reached, the process proceeds to step S25, in which the steering actuator is operated via the steering control device 13, and the steering wheel is made to rotate in the opposite direction to the departure direction. In the subsequent step S26, a determination is made whether or not a predetermined time elapses after the relative-to-lane yaw angle starts to increase. When a determination is made that the predetermined time has not elapsed, step S26 is repeated, and when a determination is made that the predetermined time has elapsed, the process proceeds to step S27, in which the steering control is concluded. After that, the process proceeds to step S6 of FIG. 5A.

Each of steps S20 to S25 is not an essential step, and may be added or omitted as necessary. Specifically, only steps S20 and S21 may be omitted, only steps S22 and S23 may be omitted, or all of steps S20 to S25 may be omitted.

### <Embodiments of Present Invention>

As described above, according to the present embodiment, a driving assistance method executed by a processor is provided, the processor operating to: predict whether or not a vehicle V traveling with a steering operation of a driver will depart from a lane L in which the vehicle V is traveling; when predicting that the vehicle V will depart from the lane L, acquire a departure direction in which the vehicle V departs from the lane L and a turning direction of the vehicle V; determine whether or not the departure direction and the turning direction are a same direction; and when determining that the departure direction and the turning direction are the same direction, execute steering control such that a steering wheel of the vehicle V is not rotated in the departure direction and the vehicle V is not departed from the lane L. This can prevent the driver from misrecognizing the timing when the steering control terminates and transitions to the steering operation by the driver.

Additionally or alternatively, according to the driving assistance method of the present embodiment, the processor operates to: when determining that the departure direction and the turning direction are the same direction, rotate the steering wheel in a direction opposite to the departure direction, and maintain a rotation angle of the steering wheel from a certain timing between when a relative-to-lane yaw angle starts to increase and when an increment of the relative-to-lane yaw angle reaches a predetermined angle, wherein the relative-to-lane yaw angle is an angle between a traveling direction of the vehicle V and a tangent direction of the lane L at a position on the lane L at which the vehicle V is traveling. This can prevent the vehicle V from departing in the opposite direction to the departure direction.

Additionally or alternatively, according to the driving assistance method of the present embodiment, the processor operates to: acquire a curvature of the lane L; when the curvature is equal to or less than a predetermined value, rotate the steering wheel in a direction opposite to the departure direction, maintain a rotation angle of the steering wheel from a certain timing between when a relative-to-lane yaw angle starts to increase and when an increment of the relative-to-lane yaw angle reaches a predetermined angle, wherein the relative-to-lane yaw angle is an angle between a traveling direction of the vehicle V and a tangent direction of the lane L at a position on the lane L at which the vehicle V is traveling, and terminate the steering control in a state of maintaining the rotation angle; and when the curvature is greater than the predetermined value, rotate the steering wheel in the direction opposite to the departure direction, maintain the rotation angle of the steering wheel from a certain timing between when the relative-to-lane yaw angle starts to increase and when the increment of the relative-to-lane yaw angle reaches the predetermined angle, rotate the steering wheel in the direction opposite to the departure direction from a certain timing after starting to maintain the rotation angle, and terminate the steering control in a state in which the steering wheel is rotating in the direction opposite to the departure direction. This can control the rotation speed of the steering wheel due to the self-aligning torque, thereby suppressing changes in the behavior of the vehicle V.

Additionally or alternatively, according to the driving assistance method of the present embodiment, the processor operates to, when the curvature is greater than the predetermined value, set a speed at which the steering wheel is rotated in the direction opposite to the departure direction to be greater as the curvature becomes greater. This can control the rotation speed of the steering wheel due to the self-aligning torque, thereby suppressing changes in the behavior of the vehicle V.

Additionally or alternatively, according to the driving assistance method of the present embodiment, the processor operates to: acquire a traveling speed of the vehicle V; when the traveling speed is equal to or less than a predetermined speed, rotate the steering wheel in a direction opposite to the departure direction, maintain a rotation angle of the steering wheel from a certain timing between when a relative-to-lane yaw angle starts to increase and when an increment of the relative-to-lane yaw angle reaches a predetermined angle, wherein the relative-to-lane yaw angle is an angle between a traveling direction of the vehicle V and a tangent direction of the lane La at a position on the lane La at which the vehicle V is traveling, and terminate the steering control in a state of maintaining the rotation angle; and when the traveling speed is faster than the predetermined speed, rotate the steering wheel in the direction opposite to the departure direction, maintain the rotation angle of the steering wheel from a certain timing between when the relative-to-lane yaw angle starts to increase and when the increment of the relative-to-lane yaw angle reaches the predetermined angle, rotate the steering wheel in the direction opposite to the departure direction from a certain timing after starting to maintain the rotation angle, and terminate the steering control in a state in which the steering wheel is rotating in the direction opposite to the departure direction. This can control the rotation speed of the steering wheel due to the self-aligning torque, thereby suppressing changes in the behavior of the vehicle V.

Additionally or alternatively, according to the driving assistance method of the present embodiment, the processor operates to, when the traveling speed is faster than the predetermined speed, set a speed at which the steering wheel is rotated in the direction opposite to the departure direction to be greater as the traveling speed becomes faster. This can control the rotation speed of the steering wheel due to the self-aligning torque, thereby suppressing changes in the behavior of the vehicle V.

Additionally or alternatively, according to the present embodiment, a driving assistance device 14 is provided, comprising: a prediction unit 22 configured to predict whether or not a vehicle V traveling with a steering operation of a driver will depart from a lane L in which the vehicle V is traveling; an acquisition unit 23 configured to, when the prediction unit predicts that the vehicle V will depart from the lane L, acquire a departure direction in which the vehicle V departs from the lane L and a turning direction of the vehicle V; and a control unit 24 configured to: determine whether or not the departure direction and the turning direction are a same direction; and when determining that the departure direction and the turning direction are the same direction, execute steering control such that a steering wheel of the vehicle V is not rotated in the departure direction and the vehicle V is not departed from the lane L. This can prevent the driver from misrecognizing the timing when the steering control terminates and transitions to the steering operation by the driver.

### Description of Reference Numerals

1... Driving assistance system, 11... Imaging device, 12... Subject vehicle state detection device, 13... Steering control device, 14... Driving assistance device, 141... CPU (processor), 142... ROM, 143... RAM, 2... Assistance unit, 21... Recognition unit, 22... Prediction unit, 23... Acquisition unit, 24...Control unit, B1, B2, B1a, B2a... Boundary line, C1... Line parallel to front-rear direction of vehicle, C2... Tangent to boundary, D... Distance, L, La... Lane, P1 to P5, P1a to P5a, Px, Py... Position, V...Vehicle, X, Xa... Arrow, α... Relative-to-lane yaw angle

## Claims

1. A driving assistance method executed by a processor, the processor operating to:
predict whether or not a vehicle traveling with a steering operation of a driver will depart from a lane in which the vehicle is traveling;
when predicting that the vehicle will depart from the lane, acquire a departure direction in which the vehicle departs from the lane and a turning direction of the vehicle;
determine whether or not the departure direction and the turning direction are a same direction; and
when determining that the departure direction and the turning direction are the same direction, execute steering control such that a steering wheel of the vehicle is not rotated in the departure direction and the vehicle is not departed from the lane.

2. The driving assistance method according to claim 1, wherein the processor operates to:
when determining that the departure direction and the turning direction are the same direction, rotate the steering wheel in a direction opposite to the departure direction; and
maintain a rotation angle of the steering wheel from a certain timing between when a relative-to-lane yaw angle starts to increase and when an increment of the relative-to-lane yaw angle reaches a predetermined angle, wherein the relative-to-lane yaw angle is an angle between a traveling direction of the vehicle and a tangent direction of the lane at a position on the lane at which the vehicle is traveling.

3. The driving assistance method according to claim 1 or 2, wherein the processor operates to:
acquire a curvature of the lane;
when the curvature is equal to or less than a predetermined value,
rotate the steering wheel in a direction opposite to the departure direction,
maintain a rotation angle of the steering wheel from a certain timing between when a relative-to-lane yaw angle starts to increase and when an increment of the relative-to-lane yaw angle reaches a predetermined angle, wherein the relative-to-lane yaw angle is an angle between a traveling direction of the vehicle and a tangent direction of the lane at a position on the lane at which the vehicle is traveling, and
terminate the steering control in a state of maintaining the rotation angle; and
when the curvature is greater than the predetermined value,
rotate the steering wheel in the direction opposite to the departure direction,
maintain the rotation angle of the steering wheel from a certain timing between when the relative-to-lane yaw angle starts to increase and when the increment of the relative-to-lane yaw angle reaches the predetermined angle,
rotate the steering wheel in the direction opposite to the departure direction from a certain timing after starting to maintain the rotation angle, and
terminate the steering control in a state in which the steering wheel is rotating in the direction opposite to the departure direction.

4. The driving assistance method according to claim 3, wherein the processor operates to, when the curvature is greater than the predetermined value, set a speed at which the steering wheel is rotated in the direction opposite to the departure direction to be greater as the curvature becomes greater.

5. The driving assistance method according to any one of claims 1 to 4, wherein the processor operates to:
acquire a traveling speed of the vehicle;
when the traveling speed is equal to or less than a predetermined speed,
rotate the steering wheel in a direction opposite to the departure direction,
maintain a rotation angle of the steering wheel from a certain timing between when a relative-to-lane yaw angle starts to increase and when an increment of the relative-to-lane yaw angle reaches a predetermined angle, wherein the relative-to-lane yaw angle is an angle between a traveling direction of the vehicle and a tangent direction of the lane at a position on the lane at which the vehicle is traveling, and
terminate the steering control in a state of maintaining the rotation angle; and
when the traveling speed is faster than the predetermined speed,
rotate the steering wheel in the direction opposite to the departure direction,
maintain the rotation angle of the steering wheel from a certain timing between when the relative-to-lane yaw angle starts to increase and when the increment of the relative-to-lane yaw angle reaches the predetermined angle,
rotate the steering wheel in the direction opposite to the departure direction from a certain timing after starting to maintain the rotation angle, and
terminate the steering control in a state in which the steering wheel is rotating in the direction opposite to the departure direction.

6. The driving assistance method according to claim 5, wherein the processor operates to, when the traveling speed is faster than the predetermined speed, set a speed at which the steering wheel is rotated in the direction opposite to the departure direction to be greater as the traveling speed becomes faster.

7. A driving assistance device comprising:
a prediction unit configured to predict whether or not a vehicle traveling with a steering operation of a driver will depart from a lane in which the vehicle is traveling;
an acquisition unit configured to, when the prediction unit predicts that the vehicle will depart from the lane, acquire a departure direction in which the vehicle departs from the lane and a turning direction of the vehicle; and
a control unit configured to:
determine whether or not the departure direction and the turning direction are a same direction; and
when determining that the departure direction and the turning direction are the same direction, execute steering control such that a steering wheel of the vehicle is not rotated in the departure direction and the vehicle is not departed from the lane.
